# EUROPEAN PATENT APPLICATION

(11) **EP 4 006 582 A1**
(43) Date of publication of application: **01.06.2022**
(21) Application number: 21198882.9
(22) Date of filing: 24.09.2021
(51) Int. Cl.: G01S 13/42, G01S 13/86, G01S 13/931, G01S 17/42, G01S 17/931, G01S 7/481, G01S 7/00

(54) **METHOD AND SYSTEM FOR DETERMINING A VEHICLE TRAJECTORY THROUGH A BLIND SPOT**

(30) Priority: 30.11.2020 RU 2020139213
(71) Applicant: YANDEX SELF DRIVING GROUP LLC, Moscow, Skolkovo 121205 (RU)
(72) Inventor: OTLIGA, Viktor Igorevich, Minsk (BY); TRUKHANOVICH, Uladzislau Andreevich, Luninets (BY)
(74) Representative: Murgitroyd & Company

(57) **Abstract**

A method and system for determining a trajectory for a vehicle (220) comprising one or more radars. A proposed trajectory for the vehicle (220) is received. The trajectory comprises a location outside of a field of view of the one or more radars. A stored time span corresponding to the location is retrieved. A predicted time that the vehicle (220) would exit the location is determined. If the predicted time is within the stored time span, that vehicle (220) is authorized to proceed along the trajectory.

## Description

### FIELD OF TECHNOLOGY

The present technology relates to determining a trajectory for a vehicle and, more specifically, to methods and systems for determining a vehicle trajectory that passes through an area that is not visible to the vehicle's radar.

### BACKGROUND

Self-driving vehicles rely on a variety of sensors, including various scanning devices, to provide information to the self-driving vehicle about its immediate surroundings. The scanning devices frequently used in self-driving vehicles include light detection and ranging (LiDAR) scanning systems, radar scanning systems, and/or cameras.

Some of the sensors used to monitor the environment around a self-driving vehicle, such as radars, may rotate. The field of view (FOV) of a rotating radar will cyclically rotate around the axis of the radar. Because the radar is rotating, at any given time there may be blind spots in areas where the radar is not currently sending, receiving, or processing signals. These blind spots will rotate around the self-driving vehicle as the radar rotates.

The self-driving vehicle may travel according to a trajectory determined by systems on the self-driving vehicle and/or systems communicating with the self-driving vehicle. If the trajectory includes a blind spot, it might not be considered safe for the self-driving vehicle to follow the trajectory because another vehicle could be in the blind spot and not detected by the self-driving vehicle. The self-driving vehicle might wait to enter the blind spot until the blind spot is back in the FOV of the self-driving vehicle's radar. The self-driving vehicle can then confirm that the trajectory is clear of other vehicles. These blind spots might cause the self-driving car to delay maneuvers or select a less efficient trajectory. For the foregoing reasons, there is a need for new methods and systems for determining a vehicle trajectory.

US 10,146,223 issued to Waymo LLC, on December 4, 2018, discloses technology that relates to identifying sensor occlusions due to the limits of the ranges of a vehicle's sensors and using this information to maneuver the vehicle. As an example, the vehicle is maneuvered along a route that includes traveling on a first roadway and crossing over a lane of a second roadway. A trajectory is identified from the lane that will cross with the route during the crossing at a first point. A second point beyond a range of the vehicle's sensors is selected. The second point corresponds to a hypothetical vehicle moving towards the route along the lane. A distance between the first point and the second point is determined. An amount of time that it would take the hypothetical vehicle to travel the distance is determined and compared to a threshold amount of time. The vehicle is maneuvered based on the comparison to complete the crossing.

### SUMMARY

A self-driving vehicle might be configured to travel on a trajectory that is within the current FOV of the vehicle's sensors. If a preferred trajectory is not within the current FOV of the vehicles' sensors, the vehicle might not be permitted to travel on the preferred trajectory. The vehicle might not be permitted to travel on the most efficient or safest trajectory if it is not within the current FOV of the vehicles' sensors. Developers of the present technology have appreciated that self-driving vehicles may be improved by allowing the vehicle to travel through areas that are outside of the FOV of the vehicles' sensors.

Rather than eliminating possible trajectories that are not within the current FOV of the vehicles' sensors, it may be preferable to allow the vehicle to travel on a trajectory that is not currently within the current FOV of the vehicles' sensors if the vehicle can travel safely on that trajectory. For at least the reasons presented above, developers of the present technology have devised methods and systems for generating trajectories that are outside of the current FOV of the vehicles' sensors.

The environment surrounding a vehicle may be divided into areas, such as by overlaying a grid on a map of surroundings of the vehicle. Each time an area is scanned by the vehicle's sensors, a safe time span may be determined for the area. A record indicating the safe time span may be stored. When the area is scanned again, an updated safe time span may be determined and stored as a replacement for the previous safe time span.

If a trajectory is proposed that crosses an area that is currently in a blind spot, i.e. an area outside of the FOV of the vehicle's sensors, the stored safe time span for that area may be retrieved. An estimated time that the vehicle will pass through the area may be determined and then compared to the safe time span. If the vehicle will have entered and/or exited the area during the safe time span, the trajectory may be approved even though the trajectory includes a blind spot.

Embodiments of the present technology have been developed based on developers' appreciation of at least one technical problem associated with the prior art solutions. Therefore, developers have devised methods and systems for determining a trajectory for a vehicle where the trajectory includes a blind spot.

In a first broad aspect of the present technology, there is provided a method of determining a trajectory for a vehicle comprising one or more radars, the method executable by a computing system, the method comprising: receiving a proposed trajectory for the vehicle; determining that the proposed trajectory comprises a location outside of a field of view of the one or more radars; retrieving a stored time span corresponding to the location; determining a predicted time that the vehicle would exit the location; determining that the predicted time is within the stored time span; and after determining that the predicted time is within the stored time span, authorizing the vehicle to proceed along the proposed trajectory. In certain embodiments, the computing system is a server. In certain embodiments, the computing system is at least partially located in the vehicle.

In some implementations of the method, determining that the proposed trajectory comprises the location outside of the field of view of the one or more radars comprises: determining a current field of view of the one or more radars; and determining whether the location is in the current field of view.

In some implementations of the method, determining the current field of view of the one or more radars comprises determining the field of view based on a current orientation of the one or more radars.

In some implementations of the method, the method further comprises prior to determining that the proposed trajectory comprises the location outside of the field of view of the one or more radars: receiving radar data corresponding to the location from the one or more radars; and determining, based on the radar data, the stored time span.

In some implementations of the method, determining the stored time span comprises: determining a second location of a second vehicle traveling towards the location; determining a distance between the second location and the location; determining a speed of the second vehicle; determining, based on the distance and the speed, a time that the second vehicle will arrive at the location; and determining, based on the time that the second vehicle will arrive at the location, an end time of the stored time span.

In some implementations of the method, the method further comprises determining, based on a time at which the radar data was recorded, a start time of the stored time span.

In some implementations of the method, determining the stored time span comprises: determining a second location outside of the field of view of the one or more radars; determining a distance between the second location and the location; determining a speed limit corresponding to the location; determining, based on the distance and the speed limit, a travel time from the second location to the location; and determining, based on the travel time, an end time of the stored time span.

In some implementations of the method, determining the second location comprises: determining a lane corresponding to the location; determining a direction of travel of a roadway comprising the location; and determining the second location by determining a nearest location, to the location, that is outside of the field of view of the one or more radars, in the lane, and wherein a vehicle traveling in the direction of travel of the roadway would travel from the nearest location to the location.

In some implementations of the method, the radar data is received at a first time, and the method further comprises: receiving, at a second time after the first time, additional radar data corresponding to the location from the one or more radars; determining, based on the additional radar data, an updated time span for the location; and replacing the stored time span with the updated time span.

In some implementations of the method, determining the predicted time that the vehicle would exit the location comprises: determining a speed of the vehicle; determining a distance between a current location of the vehicle and the location; and determining, based on the speed of the vehicle and the distance, the predicted time that the vehicle would exit the location.

In some implementations of the method, the one or more radars comprise one or more light detection and ranging (LiDAR) devices.

In some implementations of the method, the one or more radars comprise: a short range radar; and a long-range radar, wherein the long-range radar is configured to rotate.

In another broad aspect of the present technology, there is provided a method of determining a trajectory for a vehicle comprising one or more radars, the method executable by a server, the method comprising: receiving a proposed trajectory for the vehicle; determining that the proposed trajectory comprises a location outside of a field of view of the one or more radars; retrieving a stored time span corresponding to the location; determining a predicted time that the vehicle would exit the location; determining that the predicted time is later than the stored time span; and after determining that the predicted time is later than the stored time span, rejecting the proposed trajectory.

In some implementations of the method, the method further comprises determining a second trajectory for the vehicle, wherein the second trajectory is within the field of view of the one or more radars.

In some implementations of the method, the method further comprises: waiting until the proposed trajectory is within the field of view of the one or more radars; and approving the proposed trajectory after the proposed trajectory is within the field of view of the one or more radars.

In some implementations of the method, the method further comprises, prior to determining that the proposed trajectory comprises the location outside of the field of view of the one or more radars: receiving radar data corresponding to the location from the one or more radars; and determining, based on the radar data, the stored time span.

In some implementations of the method, retrieving the stored time span corresponding to the location comprises: determining an area comprising the location; and retrieving, based on an identifier of the area, the stored time span.

In another broad aspect of the present technology, there is provided a vehicle comprising: one or more radars, and a computing system comprising at least one processor and memory storing a plurality of executable instructions which, when executed by the at least one processor, cause the computing system to: determine a proposed trajectory for the vehicle; determine that the proposed trajectory comprises a location outside of a field of view of the one or more radars; retrieve a stored time span corresponding to the location; determine a predicted time that the vehicle would exit the location; determine that the predicted time is within the stored time span; and after determining that the predicted time is within the stored time span, cause the vehicle to proceed along the proposed trajectory.

In some implementations of the vehicle, the instructions, when executed by the at least one processor, cause the computing system to: receive radar data corresponding to the location from the one or more radars; and determine, based on the radar data, the stored time span.

In some implementations of the vehicle, the one or more radars comprise one or more light detection and ranging (LiDAR) devices.

In the context of the present specification, a "server" is a computer program that is running on appropriate hardware and is capable of receiving requests (e.g. from client devices) over a network, and carrying out those requests, or causing those requests to be carried out. The hardware may be implemented as one physical computer or one physical computer system, but neither is required to be the case with respect to the present technology. In the present context, the use of the expression a "server" is not intended to mean that every task (e.g. received instructions or requests) or any particular task will have been received, carried out, or caused to be carried out, by the same server (i.e. the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server."

In the context of the present specification, "electronic device" may be any computer hardware that is capable of running software appropriate to the relevant task at hand. In the context of the present specification, the term "electronic device" implies that a device can function as a server for other electronic devices and client devices, however it is not required to be the case with respect to the present technology. Thus, some (non-limiting) examples of electronic devices include personal computers (desktops, laptops, netbooks, etc.), smart phones, and tablets, as well as network equipment such as routers, switches, and gateways. It should be understood that in the present context the fact that the device functions as an electronic device does not mean that it cannot function as a server for other electronic devices. The use of the expression "an electronic device" does not preclude multiple client devices being used in receiving/sending, carrying out or causing to be carried out any task or request, or the consequences of any task or request, or steps of any method described herein.

In the context of the present specification, "client device" is any computer hardware that is capable of running software appropriate to the relevant task at hand. Some (non-limiting) examples of client devices include personal computers (desktops, laptops, netbooks, etc.), smart phones, and tablets, as well as network equipment such as routers, switches, and gateways It should be noted that a device acting as a client device in the present context is not precluded from acting as a server to other client devices. The use of the expression "a client device" does not preclude multiple client devices being used in receiving/sending, carrying out or causing to be carried out any task or request, or the consequences of any task or request, or steps of any method described herein.

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, etc.

In the context of the present specification, the expression "software component" is meant to include software (appropriate to a particular hardware context) that is both necessary and sufficient to achieve the specific function(s) being referenced.

In the context of the present specification, the expression "computer information storage media" (also referred to as "storage media") is intended to include media of any nature and kind whatsoever, including without limitation RAM, ROM, disks (CD-ROMs, DVDs, floppy disks, hard drivers, etc.), USB keys, solid state-drives, tape drives, etc. A plurality of components may be combined to form the computer information storage media, including two or more media components of a same type and/or two or more media components of different types.

In the context of the present specification, a "database" may be any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first database" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware components, in other cases they may be different software and/or hardware components.

Implementations of the present technology may each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

These and other features, aspects and advantages of the present technology will become better understood with regard to the following description, appended claims and accompanying drawings where:
Figure 1 depicts a schematic diagram of an example computer system for implementing non-limiting embodiments of the present technology;
Figure 2 depicts vehicle systems according to some embodiments of the present technology;
Figure 3 depicts the field of view (FOV) of a vehicle according to some embodiments of the present technology;
Figure 4 depicts a grid of a vehicle environment according to some embodiments of the present technology;
Figure 5 is a table of safe time spans according to some embodiments of the present technology;
Figure 6 is a flow diagram of a method for recording safe time spans according to some embodiments of the present technology;
Figure 7 is a flow diagram of a method for determining safe time spans according to some embodiments of the present technology; and
Figure 8 is a flow diagram of a method for determining a vehicle trajectory according to some embodiments of the present technology.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labelled as a "processor," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application-specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

### Computer System

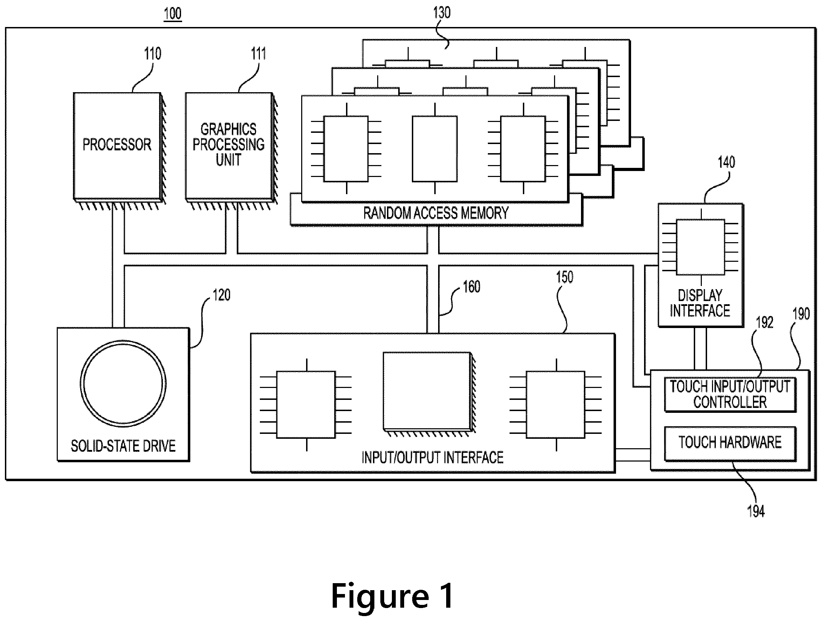

With reference to Figure 1, there is shown a computer system 100 suitable for use with some implementations of the present technology. In some embodiments, the computer system 100 may be implemented by any of a conventional personal computer, a network device and/or an electronic device (such as, but not limited to, a mobile device, a tablet device, a server, a controller unit, a control device, etc.), and/or any combination thereof appropriate to the relevant task at hand. In some embodiments, the computer system 100 comprises various hardware components including one or more single or multi-core processors collectively represented by processor 110, a solid-state drive 120, a random access memory 130, and an input/output interface 150. The computer system 100 may be a computer specifically designed to operate a machine learning algorithm (MLA). The computer system 100 may be a generic computer system. The computer system 100 may be a computer specifically designed to communicate with vehicle systems and/or operate a vehicle. Some or all of the computer system 100 may be integrated in a vehicle.

In some embodiments, the computer system 100 may also be a subsystem of one of the above-listed systems. The computer system 100 may be an "off-the-shelf' generic computer system. In some embodiments, the computer system 100 may be distributed amongst multiple systems. The computer system 100 may be specifically dedicated to the implementation of the present technology. As a person in the art of the present technology may appreciate, multiple variations as to how the computer system 100 is implemented may be envisioned without departing from the scope of the present technology.

Those skilled in the art will appreciate that processor 110 is generally representative of a processing capability. In some embodiments, in place of or in addition to one or more conventional Central Processing Units (CPUs), one or more specialized processing cores may be provided. For example, one or more Graphic Processing Units 111 (GPUs), Tensor Processing Units (TPUs), and/or other so-called accelerated processors (or processing accelerators) may be provided in addition to or in place of one or more CPUs.

System memory will typically include random access memory 130, but is more generally intended to encompass any type of non-transitory system memory such as static random access memory (SRAM), dynamic random access memory (DRAM), synchronous DRAM (SDRAM), read-only memory (ROM), or a combination thereof. Solid-state drive 120 is shown as an example of a mass storage device, but more generally such mass storage may comprise any type of non-transitory storage device configured to store data, programs, and other information, and to make the data, programs, and other information accessible via a system bus 160. For example, mass storage may comprise one or more of a solid state drive, hard disk drive, a magnetic disk drive, and/or an optical disk drive.

Communication between the various components of the computer system 100 may be enabled by a system bus 160 comprising one or more internal and/or external buses (e.g., a PCI bus, universal serial bus, IEEE 1394 "Firewire" bus, SCSI bus, Serial-ATA bus, ARINC bus, etc.), to which the various hardware components are electronically coupled.

The input/output interface 150 may provide networking capabilities such as wired or wireless access. As an example, the input/output interface 150 may comprise a networking interface such as, but not limited to, a network port, a network socket, a network interface controller and the like. Multiple examples of how the networking interface may be implemented will become apparent to the person skilled in the art of the present technology. For example the networking interface may implement specific physical layer and data link layer standards such as Ethernet, Fibre Channel, Wi-Fi, Cellular Broadband, Token Ring or Serial communication protocols. The specific physical layer and the data link layer may provide a base for a full network protocol stack, allowing communication among small groups of computers on the same local area network (LAN) and large-scale network communications through routable protocols, such as Internet Protocol (IP).

The input/output interface 150 may be coupled to a touchscreen 190 and/or to the one or more internal and/or external buses 160. The touchscreen 190 may be part of the display. In some embodiments, the touchscreen 190 is the display. The touchscreen 190 may equally be referred to as a screen 190. The touchscreen 190 may be integrated in a vehicle. In the embodiments illustrated in Figure 1, the touchscreen 190 comprises touch hardware 194 (e.g., pressure-sensitive cells embedded in a layer of a display allowing detection of a physical interaction between a user and the display) and a touch input/output controller 192 allowing communication with the display interface 140 and/or the one or more internal and/or external buses 160. In some embodiments, the input/output interface 150 may be connected to a keyboard (not shown), a mouse (not shown) or a trackpad (not shown) allowing the user to interact with the computer system 100 in addition to or instead of the touchscreen 190.

According to some implementations of the present technology, the solid-state drive 120 stores program instructions suitable for being loaded into the random access memory 130 and executed by the processor 110 for executing acts of one or more methods described herein. For example, at least some of the program instructions may be part of a library or an application.

### Vehicle System

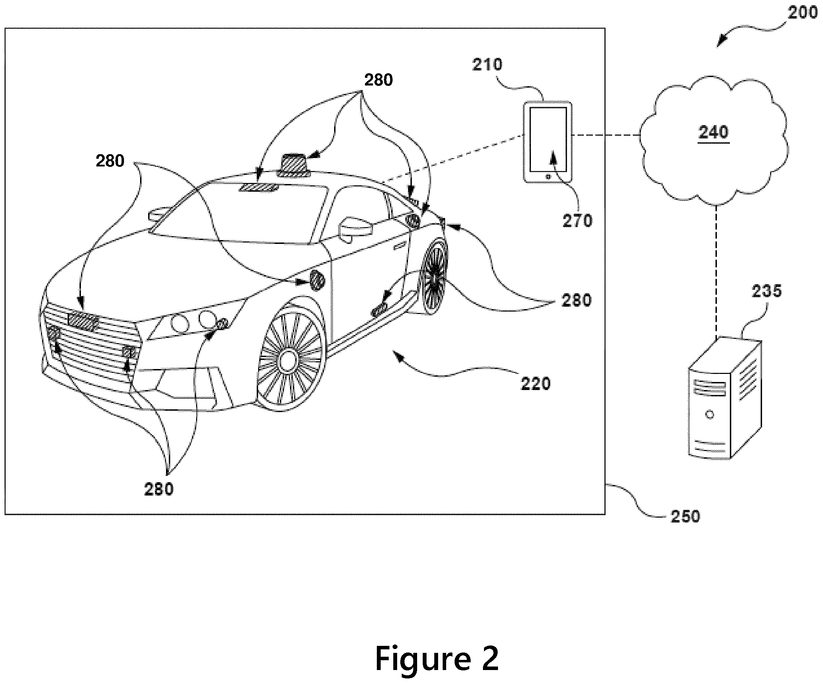

With reference to Figure 2, there is depicted vehicle systems 200 suitable for use with some non-limiting embodiments of the present technology. The vehicle systems 200 may include an electronic device 210 associated with a vehicle 220 and/or associated with a user (not depicted) who is associated with the vehicle 220 (such as an operator of the vehicle 220). The networked computing environment 200 may also include a server 235 in communication with the electronic device 210 via a communication network 240 (e.g. the Internet or the like). Although illustrated as a separate device from the vehicle 220, the electronic device 210 may be integrated in the vehicle 220. The electronic device 210 may be configured to operate the vehicle 220, such as if the vehicle 220 is a self-driving car (SDC).

The electronic device 210 may receive communications from global positioning system (GPS) satellites (not depicted) for positioning purposes. Other positioning technologies may be employed instead of or in addition to GPS.

The vehicle 220, to which the electronic device 210 is associated, may be any transportation vehicle, for leisure or otherwise, such as a private or commercial car, truck, motorbike or the like. Although the vehicle 220 is depicted as being a land vehicle, the vehicle 220 may be a watercraft, such as a boat, or an aircraft, such as a flying drone.

The vehicle 220 may be a user operated vehicle or a driver-less vehicle. The vehicle 220 may employ autonomous driving systems. In some non-limiting embodiments of the present technology, it is contemplated that the vehicle 220 could be implemented as an SDC. It should be noted that specific parameters of the vehicle 220 are not limited, these specific parameters including, for example: vehicle manufacturer, vehicle model, vehicle year of manufacture, vehicle weight, vehicle dimensions, vehicle weight distribution, vehicle surface area, vehicle height, drive train type (e.g. 2x or 4x), tire type, brake system, fuel system, mileage, vehicle identification number, and engine size.

The electronic device 210 may be a computer system 100 and/or any other type of computing system. For example, the electronic device 210 may be a vehicle engine control unit, a vehicle CPU, a vehicle navigation device, a tablet, and/or a personal computer built into the vehicle 220. The electronic device 210 may be or might not be permanently associated with the vehicle 220. Additionally or alternatively, the electronic device 210 could be implemented in a wireless communication device such as a mobile telephone (e.g. a smartphone). The electronic device 210 may have a display 270.

The electronic device 210 may include some or all of the components of the computer system 100 depicted in Figure 1. The electronic device 210 may be an on-board computer device that includes the processor 110, the solid-state drive 120 and/or the memory 130. In other words, the electronic device 210 may include hardware and/or software and/or firmware for processing data.

The communication network 240 may be the Internet, a local area network (LAN), a wide area network (WAN), a private communication network and/or any other type of network. The electronic device 210 may communicate with the communication network 240 via a wired and/or wireless communication link. Examples of wireless communication links include a 3G, 4G, or 5G communication network link, and/or any other wireless communication protocol. The communication network 240 may communicate with the server 235 via a wired and/or wireless connection.

The server 235 may include some or all of the components of the computer system 100 of Figure 1. For example the server 235 may be a Dell^{™} PowerEdge^{™} Server running the Microsoft^{™} Windows Server^{™} operating system. The server 235 may be a single server or the functionality of the server 235 may be distributed among multiple servers such as in a cloud environment.

The electronic device 210 may communicate with the server 235 to receive one or more updates. Such updates may include software updates, map updates, route updates, weather updates, and the like. The electronic device 210 may transmit, to the server 235, data regarding the vehicle 220, such as operational data, routes travelled, traffic data, performance data, and/or any other data about the vehicle 220. Some or all of the data transmitted to the server 235 may be encrypted and/or anonymized.

A variety of sensors and systems may be used by the electronic device 210 for gathering information about surroundings 250 of the vehicle 220. The vehicle 220 may be equipped with sensor systems 280. The sensor systems 280 may be used for gathering various types of data regarding the surroundings 250 of the vehicle 220.

The sensor systems 280 may include various optical systems such as one or more camera-type sensor systems that are mounted to the vehicle 220 and in communication with the electronic device 210. Broadly speaking, the one or more camera-type sensor systems may be configured to gather image data about various portions of the surroundings 250 of the vehicle 220. The image data provided by the one or more camera-type sensor systems could be used by the electronic device 210 for detecting objects, such as other vehicles, pedestrians, etc. The electronic device 210 may be configured to feed the image data provided by the one or more camera-type sensor systems to a machine learning algorithm (MLA) such as an Object Detection Neural Network (ODNN) that has been trained to localize and classify potential objects in the surroundings 250 of the vehicle 220.

The sensor systems 280 may include one or more radar-type sensor systems that are mounted to the vehicle 220 and in communication with the electronic device 210. The one or more radar-type sensor systems may be configured to make use of radio waves to gather data about various portions of the surroundings 250 of the vehicle 220. The one or more radar-type sensor systems may be configured to gather radar data about potential objects in the surroundings 250 of the vehicle 220. The data gathered by the radar-type sensor systems may indicate a distance of objects from the radar-type sensor systems, orientation of the objects, velocity and/or speed of objects, and/or other data regarding the objects.

The radar-type sensor systems may include light detection and ranging (LiDAR) systems. The LiDAR system may pulse lasers around the vehicle and measure the reflections of the lasers to determine the surroundings 250 of the vehicle 220. The vehicle 220 may include any combination of radar-type sensor systems and LiDAR sensor systems. These systems, regardless of whether they are radar-type sensor systems, LiDAR sensor systems, or both will be referred to herein as radars. Some or all of the radars of the vehicle 220 may rotate. These rotating radars may provide a rotating FOV to the electronic device 210. Because the radars are rotating, some areas in the surroundings 250 of the vehicle 220 may be periodically scanned rather than constantly scanned. When these areas are not being scanned by the radars, these areas may be considered blind spots. The electronic device 210 might not have current information as to whether there are any objects, such as other vehicles, in these blind spots. Until the radar rotates to a position in which the area is in the FOV of the radar, the electronic device 210 might not be able to determine whether there is a vehicle in that area.

### Vehicle Sensors' Field of View

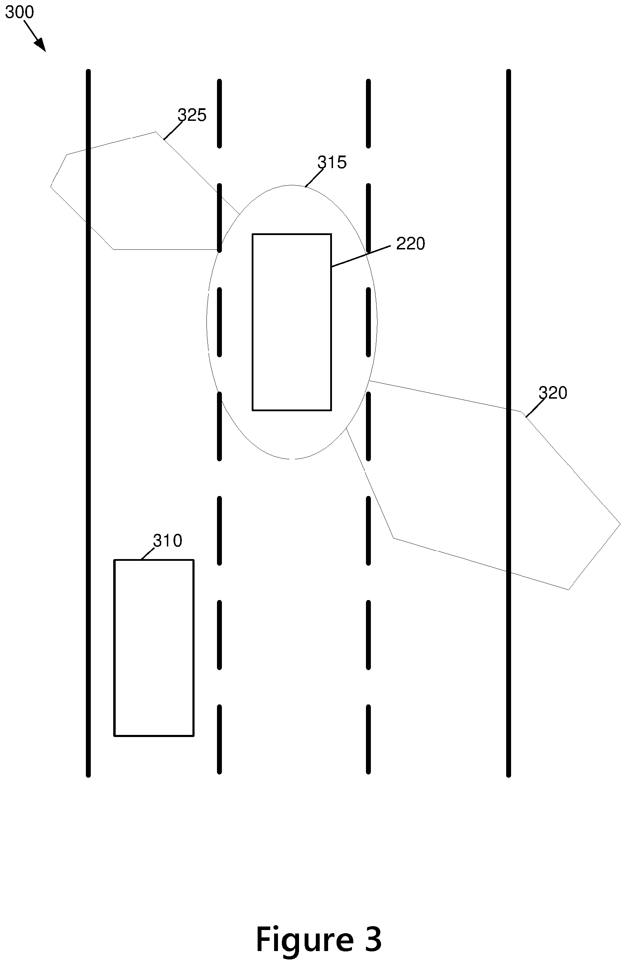

Figure 3 depicts the FOV of the vehicle 220 according to some embodiments of the present technology. It should be understood that the diagram illustrated in Figure 3 is provided as an example only, and that the FOV of the sensors of a vehicle may be unique to an individual vehicle, a sensor arrangement, and/or environmental conditions. The diagram in Figure 3 is provided for illustrative purposes.

As described above, the vehicle 220 may include various sensors, such as one or more radars. The vehicle 220 may travel on a roadway 300. While the vehicle 220 travels on the roadway 300, the field of view of the sensors on the vehicle 220 may change based on an orientation of the sensors, the environment surrounding the vehicle, environmental conditions, etc.

In the example illustrated in Figure 3, the vehicle 220 comprises multiple types of radars. One or more short range radars scan the area 315 that immediately surrounds the vehicle 220. These short range radars provide a constant field of view of the area immediately surrounding the vehicle, i.e. the zone 315. The areas covered by the zone 315 might never be in a blind spot of the sensors of the vehicle 220. Although the areas in the zone 315 may be constantly covered by radar, in some instances these areas could still become a blind spot such as due to environmental factors, communication errors, sensor malfunctions, etc.

The vehicle 220, as illustrated in Figure 3, comprises two long-range radars, a first long-range radar that is scanning the zone 325 and a second long-range radar that is scanning the zone 320. Although two long-range radars are illustrated in Figure 3, it should be understood that any number of and configuration of radars may be used by the vehicle 220.

As the long-range radars rotate, the zones 325 and 320 will rotate around the vehicle 220. A vehicle 310 on the roadway 300 is currently in a blind spot of the vehicle 220. In other words, the vehicle 310 is not currently within one of the radar zones 325, 315, and 320 of the vehicle 220. The radars of the vehicle 220 may have previously detected the vehicle 310, but currently the radars of the vehicle 220 are not providing data regarding the vehicle 310, such as a location of the vehicle 310, speed of the vehicle 310, direction of travel of the vehicle 310, etc.

### Map of Area Surrounding Vehicle

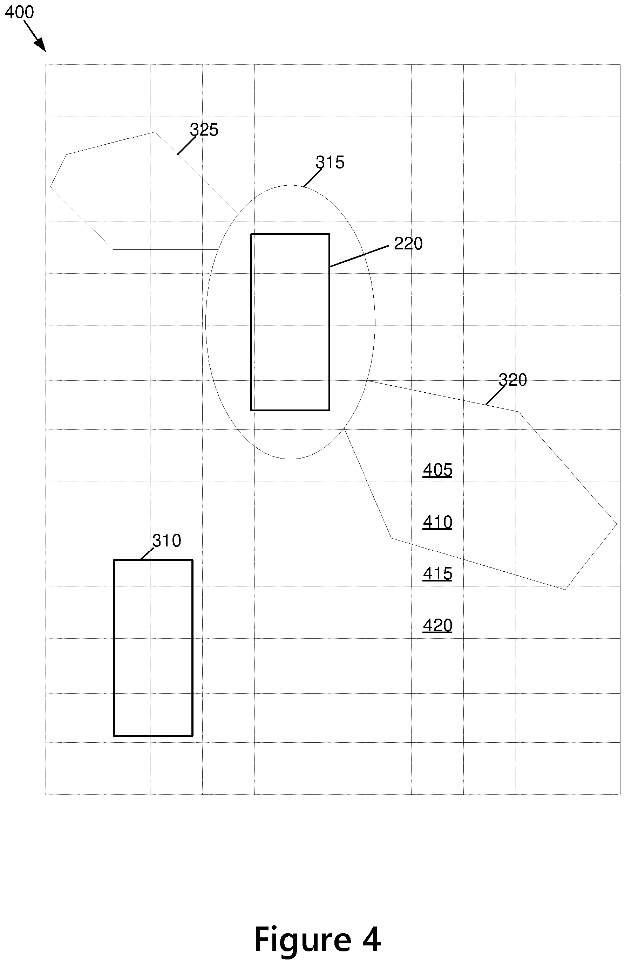

Figure 4 depicts a grid 400 of the environment surrounding the vehicle 220 according to some embodiments of the present technology. The environment surrounding the vehicle 220 may be divided into areas. Each area may be a square or any other shape. The grid 400 is one example of a method for representing areas around the vehicle 220, but any other method may be used such as circles radiating outwards from the vehicle 220, etc. The areas may be equal in size or may have different sizes. For example each area may be a one meter by one meter square.

Each time an area is scanned by the radars, a record may be stored indicating whether the area contains an object (such as another vehicle, a pedestrian, etc). It is noted that the object can be a static object or a dynamic object. In other words, the object can be any "agent" in the surrounding areas of the vehicle 220. At the time period illustrated in Figure 4, a record may be stored for the areas 405 and 410 indicating that no object was detected in those areas in the zone 320. If the radars are rotating in a counter-clockwise direction, then the areas 415 and 420 may have been previously scanned. Records may be stored for the areas 415 and 420 indicating the time that they were scanned and whether there were any objects detected in those areas.

As discussed further below, the records stored for each of the areas 405, 410, 415, and 420 may indicate a safe time span for each of those areas. The safe time span may be a determined amount of time that the vehicle 220 can safely travel through each of the areas 405, 410, 415, and 420. If a proposed trajectory for the vehicle 220 includes, for example, the area 420, an estimated time at which the vehicle 220 would exit the area 420 may be determined. The estimated time at which the vehicle 220 would exit the area 420 may be compared to stored safe time span for the area 420. If the estimated time that the vehicle 220 would exit the area 420 is within the safe time span for the area 420, the trajectory may be approved. Otherwise, if the estimated time is not within the safe time span for the area 420, the trajectory may be rejected until the radars are able to scan the area 420 again.

### Stored Time Spans

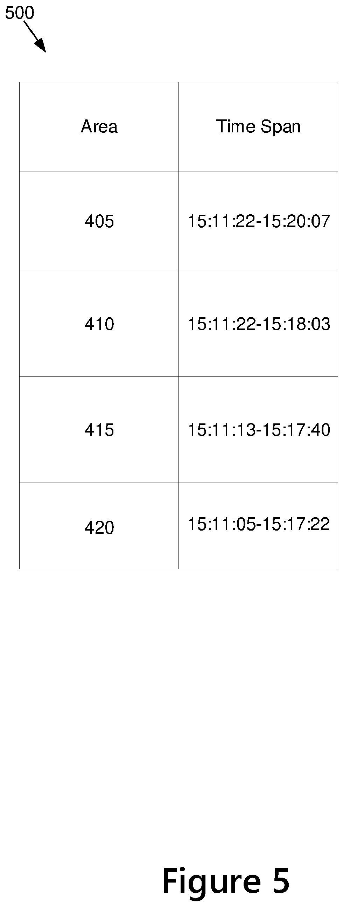

Figure 5 illustrates a table 500 of safe time spans according to some embodiments of the present technology. The table 500 is an example of how the safe time spans may be stored, but it should be understood that any storage method may be used that associates an area with a safe time span. Each of the areas 405, 410, 415, and 420 have an associated safe time span. The safe time span for an area may be determined based on a size of the FOV of the vehicle's sensors. Methods for calculating the safe time spans will be discussed in further detail below.

The safe time spans may be stored with a start time and/or an end time. In the table 500, the time spans are stored as a range of times. In some instances the safe time spans may be stored as an end time, rather than as a time span. The safe time spans may include a date.

The areas 405 and 410 both have a same start time as they are both being scanned at the present time, as illustrated in Figure 4. The areas 415 and 420 were previously scanned but are not currently being scanned and are now in a blind spot, so their start and end times are earlier than the areas 405 and 410.

When a trajectory for the vehicle 220 is determined, each area that the vehicle 220 would pass through when following the trajectory may also be determined. The safe time spans for each of those areas may be retrieved, such as from the table 500, to determine whether the trajectory should be accepted or rejected.

### Method for Recording Safe Time Spans (non-limiting embodiment)

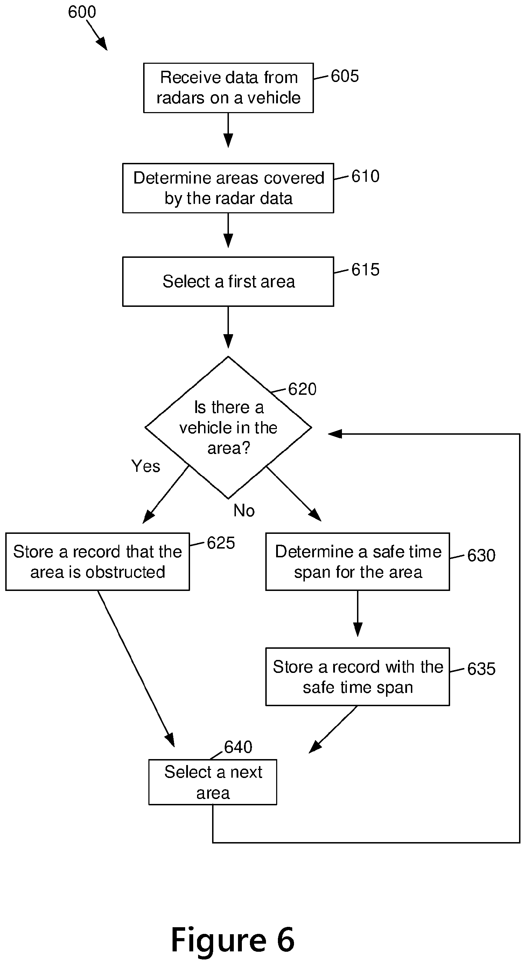

Figure 6 is a flow diagram of a method 600 for recording safe time spans according to some embodiments of the present technology. In one or more aspects, the method 600 or one or more steps thereof may be performed by a computing system, such as the computer system 100. The method 600 or one or more steps thereof may be embodied in computer-executable instructions that are stored in a computer-readable medium, such as a non-transitory mass storage device, loaded into memory and executed by a CPU. Some steps or portions of steps in the flow diagram may be omitted or changed in order.

### STEP 605: Receive radar data

At step 605 data may be received from radars and/or other sensors. The radars and/or other sensors may be attached to and/or integrated in a vehicle. For example the data may be received from the sensors 280 of the vehicle 220. The data may be received by one or more computer systems 100, such as one or more computer systems 100 integrated in the vehicle 220. The computer systems 100 receiving the data may be computer systems 100 controlling autonomous driving and/or other safety functions of the vehicle 220.

### STEP 610: Determine areas included in radar data

As discussed above, the data received at step 605 may include various blind spots. The range and/or coverage of the radars may be affected by rotation of the radars, environmental factors, and/or other conditions. At step 610 the areas covered by the radar data received at step 605 may be determined. The areas may be defined on a map and/or in relation to the vehicle. The areas may be any size and/or shape. Figure 4 illustrates an example in which areas are defined using a grid.

### STEP 615: Select a first area

At step 615 a first area of the areas determined at step 610 may be selected. The areas may be selected in any order. The steps 620-40, described below, may be performed in parallel, in which case multiple areas may be selected simultaneously.

### STEP 620: Determine whether the area has any obstructions

At step 620 the radar and/or other sensor data corresponding to the area may be examined to determine whether there are any obstructions, such as other vehicles, in the area. The radar data may indicate whether the radar signals reflected off any objects in the area. Multiple sources of data corresponding to the area may be used to determine whether there are any obstructions, such as LiDAR data corresponding to the area and video of the area. A machine learning algorithm (MLA) may be used to predict whether the area has any obstructions.

If the area is determined to have an obstruction, the method 600 may proceed to step 625. Otherwise, if the area is determined to be empty, the method 600 may proceed to step 630.

### STEP 625: Store a record that the area has an obstruction

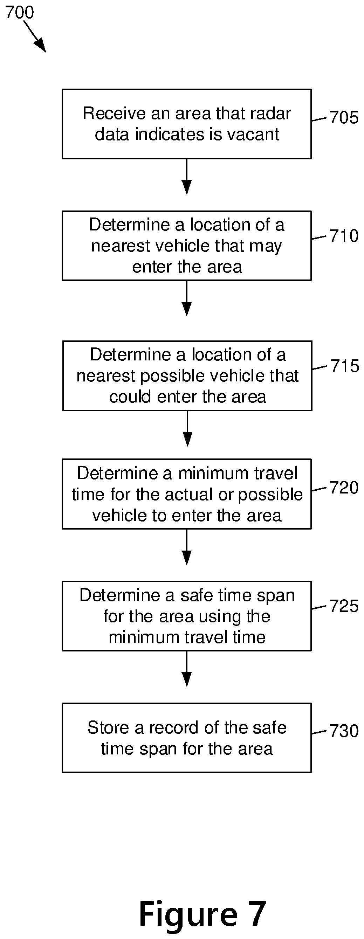

At step 625 a record may be stored indicating that the area has an obstruction. The record may indicate that there is currently no safe time span for the area. If a moving vehicle is detected in the area, details about the moving vehicle may be stored such as a direction of travel, speed, size of the vehicle, and/or any other data relating to the vehicle. As discussed in further detail below with regard to Figure 7, the information stored regarding the vehicle may be used to determine a safe time span for other areas.

### STEP 630: Determine a safe time span for the area

If the area is determined to not be occupied at step 620, a safe time span for the area may be determined at step 630. The safe time span may be a time period that the area is predicted to be safe for the vehicle to travel through, in other words a time span in which the area is predicted to be free of other vehicles or other obstructions.

The safe time span may be determined based on the location, direction of travel, speed of other vehicles around the vehicle 220, and/or speed limit of the roadway on which the vehicle is traveling. The safe time span may be determined based on blind spots, for which it is unknown whether the areas in those blind spots are occupied by other vehicles. Figure 7, discussed below, describes an example of a method for calculating a safe time span for an area.

### STEP 635: Store a record with the safe time span

At step 635 a record with the safe time span may be stored. The record may include an indication of the area, such as a set of latitude and longitude coordinates, a set of coordinates relative to the position of the vehicle, and/or any other indication of an area. The record may be stored in a table, such as the table 500, and/or any other data structure. Each time an updated safe time span is determined for an area, the record corresponding to that area may be updated and/or replaced with the new safe time span. Records for which the safe time span has expired may be deleted, such as when the current time is later than the end of the safe time span.

### STEP 640: Select a next area

At step 640 a next area covered by the radar data may be selected, and a safe time span for that area may be determined using the steps 620-35. Although the method 600 illustrates the areas in the radar data being processed individually, the areas may be processed in parallel and/or multiple areas may be processed together. For example if a vehicle is detected using the radar data, each of the areas in which the vehicle is located may be processed together and an indication that the area is obstructed may be stored for each of those areas. If there are no more areas to process at step 640, the method 600 may end until more sensor data is received.

### Method for Determining Safe Time Spans (non-limiting embodiment)

Figure 7 is a flow diagram of a method 700 for determining safe time spans according to some embodiments of the present technology. In one or more aspects, the method 700 or one or more steps thereof may be performed by a computing system, such as the computer system 100. The method 700 or one or more steps thereof may be embodied in computer-executable instructions that are stored in a computer-readable medium, such as a non-transitory mass storage device, loaded into memory and executed by a CPU. Some steps or portions of steps in the flow diagram may be omitted or changed in order.

As discussed above, safe time spans may be determined for locations and/or areas. The areas may be of any size and/or shape. The safe time spans may be a period of time that the area is predicted to be free of other vehicles and safe for a vehicle to enter and/or exit.

### STEP 705: Receive an area that radar data indicates is vacant

At step 705 an indication of an area may be received. For example the indication of the area may be received at step 630 of the method 600. The indication of the area may be coordinates, a location relative to a vehicle, and/or any other indication of an area. The area may have been determined to be vacant. In other words, a determination may have been made that no vehicle is currently present in the area.

### STEP 710: Determine a location of a nearest vehicle that may enter the area

At step 710 a location of a nearest vehicle that may enter the area may be determined. The location may be of a nearest vehicle and/or of a vehicle that would likely enter the area soonest. If no vehicle is detected that will enter the area received at step 705, this step may be skipped. For example if no vehicle has been detected that is traveling towards the area, this step may be skipped.

Radar data, sensor data, and/or other data may be used to determine whether there are any vehicles traveling towards the area. Stored data corresponding to other areas may be used to determine if there are any vehicles traveling towards the area. If there are one or more vehicles traveling in the direction of the area, a location may be selected for the vehicle that will enter the area first, such as the vehicle closest to the area.

A location of a vehicle could be selected even if the vehicle will not, based on its current trajectory, enter the area. If the vehicle could change direction to enter the area, a location corresponding to that vehicle may be selected. For example, the area may be in a first lane and a first vehicle traveling in that first lane may be estimated to enter the area in fifteen seconds. A second vehicle traveling in a different lane could switch lanes and enter the area in five seconds based on the second vehicle's current speed. In this example a location of the second vehicle may be selected as the location of the nearest vehicle that may enter the area.

### STEP 715: Determine a location of a nearest possible vehicle that could enter the area

At step 710 a location corresponding to an actual detected vehicle may be selected. In contrast, at step 715 a location of a hypothetical vehicle may be determined. The location may be a location that is outside of radar range or in a blind spot in which a vehicle could exist but not be detected. A nearest location to the area that is outside of radar range and/or in a blind spot may be selected.

The location may be selected based on known features of the roadway, such as direction of travel and/or lanes. For example if the direction of travel of the roadway is northbound, a location to the south of the area may be selected because a vehicle in that location would be traveling in the direction of the area. The location may be determined based on the lane that the area is in. A lane corresponding to the area may be determined. The location selected may be a nearest location, that is outside of radar range, in the same lane as the area.

A probability that a vehicle is in a location may be predicted for locations outside of the vehicle's radar range and/or in the vehicle's blind spots. The predicted probability may be determined by inputting sensor data and/or other data into a machine learning algorithm (MLA) trained to predict a probability that a location contains a vehicle. The location for the nearest possible vehicle may be selected based on the predicted probability. For example a threshold predicted probability may be set, where locations must satisfy the threshold predicted probability to be selected as the location for the hypothetical vehicle.

### STEP 720: Determine a minimum travel time for a vehicle to enter the area

At step 720 a minimum travel time for one of the vehicles to enter the area may be determined. A minimum travel time may be determined for the actual vehicle identified at step 710 and/or the hypothetical vehicle determined at step 715. The minimum travel time may be determined based on a speed limit of the roadway that the vehicles are traveling on. In the case of an actual detected vehicle, the minimum travel time may be determined based on a detected speed that the vehicle is traveling.

A speed may be selected for calculating the minimum travel time. The speed may be the speed limit for the roadway. In order to account for vehicles that may be traveling over the speed limit, the speed may be increased by a pre-determined amount, such as by 5 kilometres per hour or by ten percent. For example if the speed limit is 60 kilometres per hour, the speed to be used when determining the minimum travel time may be 66 kilometres per hour. The speed may be measured in any suitable units, such as meters per second.

If the speed is being calculated for an actual vehicle that was identified at step 710, the speed may be based on the detected speed of the vehicle. To account for possible acceleration of the vehicle, the detected speed may be increased by a predetermined amount.

The minimum travel time may be determined by calculating the distance between the area and the location determined at step 710 and/or 715. After calculating the distance, a minimum amount of travel time to enter the area may be determined based on the determined speed. The minimum amount of time may be the amount of time it would take for a vehicle traveling the determined speed to travel the determined distance. For example if the distance between the location of the vehicle and the area is 50 meters, and the determined speed is 36 kilometers per hour, the minimum travel time from the location to the area would be 5 seconds.

If a travel time has been calculated for both an actual vehicle location identified at step 710 and a hypothetical vehicle location determined at step 715, the minimum of the two travel times may be selected. For example if the travel time for a detected vehicle to enter the area is six seconds, and the travel time for a hypothetical vehicle to enter the area is three seconds, the minimum travel time would be three seconds.

### STEP 725: Determine a safe time span for the area

At step 725 a safe time span for the area received at step 705 may be determined. The safe time span may be determined based on the minimum travel time determined at step 720. Various methods may be used for determining the safe time span. The safe time span may begin at the time that the area was scanned by radar and/or other sensors. The minimum travel time determined at step 720 may be added to the beginning time span and that sum may be the end of the safe time span.

For example, for the area 415, as illustrated in the table 500, the time at which the area 415 was last scanned may have been 15:11:13, and the minimum travel time for a vehicle to reach that area may have been determined to be 6:27, resulting in a safe time span ending at 15:17:40 as illustrated in figure 5.

### STEP 730: Store a record of the safe time span

At step 730 a record may be stored with an indication of the area and the safe time span. Figure 5 illustrates an example of a table of safe time span records. The record may be stored in a database and/or any other type of data storage structure. The stored record may then be retrieved when determining whether to approve a proposed trajectory for a vehicle.

### Method for determining a vehicle trajectory (non-limiting embodiment)

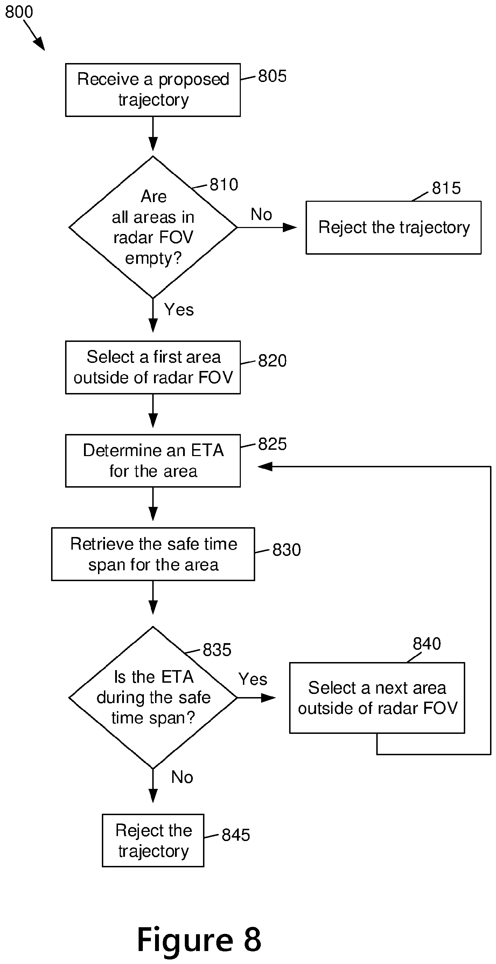

Figure 8 is a flow diagram of a method 800 for determining a vehicle trajectory according to some embodiments of the present technology. In one or more aspects, the method 800 or one or more steps thereof may be performed by a computing system, such as the computer system 100. The method 800 or one or more steps thereof may be embodied in computer-executable instructions that are stored in a computer-readable medium, such as a non-transitory mass storage device, loaded into memory and executed by a CPU. Some steps or portions of steps in the flow diagram may be omitted or changed in order.

### STEP 805: Receive a proposed trajectory

At step 805 a proposed trajectory for a vehicle may be received. The proposed trajectory may be in any format, such as a series of locations, a series of areas, a direction, a curve, a speed, and/or any other suitable format for a trajectory. If the format is not a series of areas, a series of areas that the vehicle will travel through if the vehicle follows the trajectory may be determined.

### STEP 810: Are all of the areas on the trajectory in the current FOV empty?

At step 810 a determination may be made as to whether the areas that the proposed trajectory will cross are empty. Each of the areas on the trajectory that are in the current FOV may be examined to determine whether there are any vehicles on the trajectory. If any of the areas are found to have a vehicle, the method 800 may proceed to step 815, where the trajectory may be rejected.

Otherwise, if the areas within the radar FOV are all determined to be clear of other vehicles, the method 800 may proceed to step 820 where areas that are outside of the FOV may be evaluated to determine whether the vehicle should proceed on the trajectory.

If there are no blind spots on the trajectory, the trajectory may be approved at step 810 without using the stored data indicating safe time spans. The radar and/or other sensor data can be used to determine whether there are any obstructions on the proposed trajectory and/or entering the proposed trajectory and, if there are no obstructions, the proposed trajectory can be approved for use.

### STEP 815: Reject the trajectory

At step 815 the trajectory may be rejected because it crosses an area that is currently occupied by another vehicle. An alternative trajectory may be determined that does not include the area or that would cross the area at a different time.

### STEP 820: Select an area outside of the radar FOV

At step 820 one of the areas along the trajectory that is in a blind spot may be selected. The areas on the trajectory may be selected in any order. Each of the areas that the trajectory would cross may be selected, including areas that are in a blind spot and areas that are not in a blind spot. In some instances, areas that are not in a blind spot and are currently visible to radar might not be selected.

### STEP 825: Determine an estimated time of arrival for the area

At step 825 an estimated time that the vehicle will enter and/or exit the area may be determined. The estimated time may be determined using the trajectory, planned speed of the vehicle, and/or current speed of the vehicle 220. A distance between the current location of the vehicle and the area may be determined. An amount of time that the vehicle will take to travel to the area may be determined based on the current speed and/or planned speed of the vehicle 220. The trajectory may indicate the estimate time of arrival for the area.

### STEP 830: Retrieve the safe time span for the area

At step 830 a stored safe time span for the area may be retrieved. The safe time span may have previously been determined, such as using the method 700. As discussed above, the safe time span may be periodically updated as new sensor data is received. Each time the safe time span is updated, the safe time span may be stored in association with an indication of the area. The safe time span may be retrieved from a table, database, and/or any other data structure.

### STEP 835: Compare the ETA to the safe time span

At step 835 a determination may be made as to whether the time determined at step 825 is within the safe time span retrieved at step 830. The determination may be whether the vehicle 220 would enter and/or exit the area prior to the end of the safe time span. If the vehicle 220 would not enter and/or exit the area prior to the end of the safe time span, the method 800 may continue to step 845 where the trajectory is rejected. Otherwise, if the estimated time that the vehicle 220 would enter and/or exit the area is during the safe time span, the method 800 may continue to step 840.

### STEP 840: Select a next area outside of the radar FOV

At step 840 a next area on the trajectory may be selected. An area that is in a blind spot may be selected. Actions taken at step 840 may be similar to those described above with regard to step 820.

If all areas on the trajectory have been determined to be safe and there are no remaining areas to select at step 840, the trajectory may be approved. The vehicle 220 may be instructed to follow the trajectory.

### STEP 845: Reject the trajectory

At step 845 the trajectory may be rejected because it crosses an area during a time that is not within that area's safe time span. Rather than rejecting the trajectory, the method 800 may wait until additional sensor data is received to determine whether the area is free of other vehicles and/or obstructions. An alternative trajectory may be determined that does not include the area or that would cross the area at a different time.

It should be apparent to those skilled in the art that at least some embodiments of the present technology aim to expand a range of technical solutions for addressing a particular technical problem, namely determining rank positions of elements by a ranking system.

It should be expressly understood that not all technical effects mentioned herein need to be enjoyed in each and every implementation of the present technology. For example, implementations of the present technology may be implemented without the user enjoying some of these technical effects, while other implementations may be implemented with the user enjoying other technical effects or none at all.

Modifications and improvements to the above-described implementations of the present technology may become apparent to those skilled in the art. The foregoing description is intended to be used as examples rather than limiting. The scope of the present technology is therefore intended to be limited solely by the scope of the appended claims.

## Claims

1. A method of determining a trajectory for a vehicle (220) comprising one or more radars, the method executable by a computing system, the method comprising:
receiving a proposed trajectory for the vehicle (220);
determining that the proposed trajectory comprises a location outside of a field of view of the one or more radars;
retrieving a stored time span corresponding to the location;
determining a predicted time that the vehicle (220) would exit the location;
determining that the predicted time is within the stored time span; and
after determining that the predicted time is within the stored time span, authorizing the vehicle (220) to proceed along the proposed trajectory.

2. The method of claim 1, wherein determining that the proposed trajectory comprises the location outside of the field of view of the one or more radars comprises:
determining a current field of view of the one or more radars; and
determining whether the location is in the current field of view.

3. The method of claim 2, wherein determining the current field of view of the one or more radars comprises determining the field of view based on a current orientation of the one or more radars.

4. The method of any of claims 1-3, further comprising, prior to determining that the proposed trajectory comprises the location outside of the field of view of the one or more radars:
receiving radar data corresponding to the location from the one or more radars; and
determining, based on the radar data, the stored time span.

5. The method of claim 4, wherein determining the stored time span comprises:
determining a second location of a second vehicle (220) traveling towards the location;
determining a distance between the second location and the location;
determining a speed of the second vehicle (220);
determining, based on the distance and the speed, a time that the second vehicle (220) will arrive at the location; and
determining, based on the time that the second vehicle (220) will arrive at the location, an end time of the stored time span.

6. The method of claim 5, further comprising, determining, based on a time at which the radar data was recorded, a start time of the stored time span.

7. The method of claim 4 or claim 5, wherein determining the stored time span comprises:
determining a second location outside of the field of view of the one or more radars;
determining a distance between the second location and the location;
determining a speed limit corresponding to the location;
determining, based on the distance and the speed limit, a travel time from the second location to the location; and
determining, based on the travel time, an end time of the stored time span.

8. The method of claim 7, wherein determining the second location comprises:
determining a lane corresponding to the location;
determining a direction of travel of a roadway comprising the location; and
determining the second location by determining a nearest location, to the location, that is outside of the field of view of the one or more radars, in the lane, and wherein a vehicle (220) traveling in the direction of travel of the roadway would travel from the nearest location to the location.

9. The method of any of claims 4-8, wherein the radar data is received at a first time, and further comprising:
receiving, at a second time after the first time, additional radar data corresponding to the location from the one or more radars;
determining, based on the additional radar data, an updated time span for the location; and
replacing the stored time span with the updated time span.

10. The method of any of claims 1-9, wherein determining the predicted time that the vehicle (220) would exit the location comprises:
determining a speed of the vehicle (220);
determining a distance between a current location of the vehicle (220) and the location; and
determining, based on the speed of the vehicle (220) and the distance, the predicted time that the vehicle (220) would exit the location.

11. The method of any of claims 1-10, wherein the one or more radars comprise one or more light detection and ranging (LiDAR) devices.

12. The method of any of claims 1-11, wherein the one or more radars comprise:
a short range radar; and
a long-range radar, wherein the long-range radar is configured to rotate.

13. A vehicle (220) comprising:
one or more radars, and
a computing system comprising at least one processor (110) and memory (130) storing a plurality of executable instructions which, when executed by the at least one processor (110), cause the computing system to:
determine a proposed trajectory for the vehicle (220);
determine that the proposed trajectory comprises a location outside of a field of view of the one or more radars;
retrieve a stored time span corresponding to the location;
determine a predicted time that the vehicle (220) would exit the location;
determine that the predicted time is within the stored time span; and
after determining that the predicted time is within the stored time span, cause the vehicle (220) to proceed along the proposed trajectory.

14. The vehicle (220) of claim 13, wherein the instructions, when executed by the at least one processor (110), cause the computing system to:
receive radar data corresponding to the location from the one or more radars; and
determine, based on the radar data, the stored time span.

15. The vehicle of claim 13, wherein the one or more radars comprise one or more light detection and ranging (LiDAR) devices.
